# EUROPÄISCHE PATENTSCHRIFT

(11) **EP 2 238 049 B1**
(45) Veröffentlichungstag und Bekanntmachung des Hinweises auf die Patenterteilung: **10.10.2012**
(21) Anmeldenummer: 08871201.3
(22) Anmeldetag: 25.11.2008
(51) Int. Cl.: B65D 85/804, A47J 31/36

(54) **KAPSEL FÜR AUFGUSSGETRÄNKE**
CAPSULE FOR INFUSION BEVERAGES
CAPSULE POUR BOISSONS INFUSÉES

(30) Priorität: 23.01.2008 EP 08405022
(43) Veröffentlichungstag der Anmeldung: 13.10.2010
(73) Patentinhaber: Rychiger AG, 3613 Steffisburg (CH)
(72) Erfinder: RICHIGER, Jacques, CH-3627 Heimberg (CH)
(74) Vertreter: Rüfenacht, Philipp Michael
(86) Internationale Anmeldenummer: PCT/CH2008/000495
(87) Internationale Veröffentlichungsnummer: WO 2009/092172

(56) Entgegenhaltungen:
- WO-A-2006/016813
- WO-A-2007/137974
- US-A1- 2003 056 661

## Beschreibung

### Technisches Gebiet

Die Erfindung betrifft eine Kapsel zum Zubereiten eines Aufgussgetränks, wie zum Beispiel Kaffee, Tee oder ein Milchgetränk, wobei die Kapsel zwei parallele Wandabschnitte umfasst, die zumindest zum Teil mit einer Siegelverbindung verbunden sind. Des Weiteren betrifft die Erfindung ein Gerät sowie ein Verfahren zum Zubereiten eines Aufgussgetränks unter Einsatz der Kapsel.

### Stand der Technik

Es ist bekannt, zum Zubereiten von Aufgussgetränken, insbesondere von Kaffee oder Milchgetränken wie Schokomilch, eine Kapsel zu verwenden, die mit dem entsprechenden Pulver oder Granulat des Aufgussgetränkes gefüllt ist. Dazu wird die unverbrauchte, verschlossene Kapsel mit der Hilfe eines speziell dafür eingerichteten Geräts festgehalten und dann von oben geöffnet, so dass eine Einlassöffnung entsteht. In der Regel wird zum Öffnen der Kapsel ein scharfer oder spitzer Gegenstand in der Form eines Messers oder einer Nadel verwendet.

Eine weitere Möglichkeit, die Einlassöffnung zu öffnen, wird in der Druckschrift US 2002/0078831 A1 (Cai) erwähnt: Die Einlassöffnung ist mit einer speziellen Membrane verschlossen, die dann durch den Druck einer Aufgussflüssigkeit durchbrochen wird. Durch die Einlassöffnung wird die Aufgussflüssigkeit, in den meisten Fällen ist dies heisses Wasser, unter Druck in die Kapsel eingeleitet. Die Einlassöffnung wird dabei abgedichtet, so dass die Aufgussflüssigkeit trotz deren Druck nicht bei der Einlassöffnung entweichen kann. Die Aufgussflüssigkeit vermischt sich mit dem Pulver oder Granulat und wird dann als Aufgussgetränk über eine oder mehrere Auslassöffnungen unten an der Kapsel herausgelassen. In der Regel entstehen die Auslassöffnungen dadurch, dass durch den Druck der Aufgussflüssigkeit eine spezielle Folie oder eine Wand an der Unterseite der Kapsel von innen durchbrochen wird. Damit die Wand der Kapsel oder die spezielle Folie besser durchbrochen werden kann, können Sollbruchstellen vorhanden sein. Es ist auch möglich, dass die Folie oder der Boden durch den Druck der Aufgussflüssigkeit gegen eine scharfkantige oder spitze Struktur gepresst wird, die dann die Folie bzw. den Boden perforiert. Der Druck der Aufgussflüssigkeit ist nicht nur für das Öffnen der Auslassöffnung notwendig, sondern beeinflusst ebenfalls auch die Qualität des Aufgussgetränkes.

Die US 2003/056661 (Ruguo) beschreibt ein System, eine Vorrichtung und eine Kapsel zum Zubereiten von Nahrungsmitteln, insbesondere wässeriger Getränke wie Kaffee, Espresso oder dergleichen. Schwerpunkt dieser Druckschrift ist der Öffnungsmechanismus für den Auslass der Kapsel. Unter anderem wird erwähnt, dass ein Deckel der Kapsel aus zwei Lagen bestehen kann, wobei diese mindestens je eine Aussparung haben, wobei die Aussparungen zueinander versetzt sind. Die beiden Lagen können am Rand mit einer Siegelverbindung an der Kapsel befestigt sein. Durch den Druckaufbau im Innern der Kapsel trennen sich die beiden Lagen, wodurch ein Auslass aus der Kapsel entsteht. Der Einlass in die Kapsel erfolgt herkömmlich, nämlich durch Durchstechen der Kapselwand mittels einer Nadel.

Wird zum Öffnen der Kapsel ein spitzer oder scharfer Gegenstand verwendet, so hat dies den Nachteil, dass der Gegenstand beim Öffnen und dem anschliessenden Einleiten der Aufgussflüssigkeit in die Kapsel das Aufgussgetränk kontaminieren kann. Dies kann zu Geschmackseinbussen oder sogar zu Hygieneproblemen führen. Gerade im Zusammenhang mit milchhaltigen Aufgussgetränken kann die Kontamination gravierende hygienische Folgen haben. Die Nadel oder das Messer kann nicht, wie dies mit dem Innenraum einer Leitung möglich ist, automatisch mit einer Spülflüssigkeit gespült werden. Es braucht dazu schon anspruchsvollere Reinigungseinrichtungen.

Zudem können Nadel und Messer stumpf werden und deshalb die Folie oder die Wand der Kapsel schlechter perforieren. Der Ersatz (oder das Schärfen) der Nadel bzw. des Messers bedeutet einen Wartungsaufwand.

Ein weiterer Nachteil ist, dass nach der Verwendung der Kapsel die Einlassöffnung sowie die Auslassöffnung offen bleiben. Auch bei der Methode gemäss US 2002/0078831 A1, bei der die Membrane bei der Einlassöffnung durch den Druck der Aufgussflüssigkeit durchbrochen wird, bleibt die Einlassöffnung offen, da die Membrane dauerhaft beschädigt wird. Dadurch kann nach dem Entfernen der Kapsel aus der Maschine noch eine in der Kapsel verbleibende Restflüssigkeit ausfliessen.

### Darstellung der Erfindung

Aufgabe der Erfindung ist es, eine dem eingangs genannten technischen Gebiet zugehörende Kapsel sowie ein dazugehöriges Gerät und Verfahren zu schaffen, mit denen es möglich ist, die Kapsel schonend zu öffnen, so dass eine Kontamination des Aufgussgetränkes verhindert wird.

Die Lösung der Aufgabe ist durch eine Kapsel mit den Merkmalen des Anspruchs 1, ein Gerät mit den Merkmalen des Anspruches 9 und durch ein Verfahren nach Anspruch 12 definiert. Gemäss der Erfindung umfasst die Kapsel für Aufgussgetränke zwei parallele Wandabschnitte, die zumindest zum Teil mit einer Siegelverbindung verbunden sind. Diese Siegelverbindung stellt sicher, dass die Kapsel luftdicht verschlossen ist. Es besteht nun von aussen ein Zugang zu einem Bereich dieser Siegelverbindung, so dass durch das Einleiten eines unter Druck stehenden flüssigen oder gasförmigen Mediums die Siegelverbindung zumindest zum Teil aufgetrennt wird. Dadurch entsteht eine Öffnung in das Innere der Kapsel, durch welche eine Aufgussflüssigkeit für die Zubereitung des Aufgussgetränkes eingeleitet werden kann. Das fertige Aufgussgetränk verlässt die Kapsel via eine Auslassöffnung der Kapsel. Die Auslassöffnung wird in vorbekannter Weise durch den Druck der Aufgussflüssigkeit im Innern der Kapsel geöffnet.

Ein erfindungsgemässes Gerät zum Zubereiten des Aufgussgetränks unter Einsatz der erfindungsgemässen Kapsel umfasst eine Halterung für die Kapsel und mindestens eine Zuleitung. Diese Zuleitung leitet ein unter Druck stehendes flüssiges oder gasförmiges Medium an den Zugang zur Siegelverbindung der in der Halterung eingesetzten Kapsel. Durch das Zuführen des Mediums wird, auf Grund des Druckes des Mediums, die Siegelverbindung zwischen den Wandabschnitten der Kapsel gelöst. Dadurch entsteht eine Öffnung in das Innere der Kapsel, durch welche eine Aufgussflüssigkeit zur Zubereitung der Kapsel geleitet werden kann.

Im Rahmen des erfindungsgemässen Verfahrens zur Zubereitung des Aufgussgetränks wird die Kapsel insbesondere in ein erfindungsgemässes Gerät eingesetzt. Über den Zugang zur Siegelverbindung wird ein unter Druck stehendes flüssiges oder gasförmiges Medium an die Siegelverbindung geleitet. Durch den Druck dieses Mediums wird die Siegelverbindung getrennt und es entsteht eine Öffnung zum Einleiten einer Aufgussflüssigkeit in die Kapsel.

Ein Vorteil beim erfindungsgemässen Öffnen der Kapsel ist, dass keine Teile oder Gegenstände wie Nadel oder Messer abgenützt werden. Somit gibt es weniger Verschleissteile. Auch ist es nicht notwendig, zum Schaffen der Einlassöffnung ein Werkzeug wie eine Nadel oder ein Messer mechanisch zu bewegen, was eine einfachere technische Realisierung des Geräts ermöglicht. Zudem wird die Gefahr einer Kontamination deutlich verringert, da keine Gegenstände oder Teile in die von der Kapsel aufgenommene Aufgussflüssigkeit hineinragen. Dadurch können hygienische Probleme und die Gefahr einer Geschmackseinbusse minimiert werden.

Einer der Vorteile des erfindungsgemässen Verfahrens liegt zudem darin, dass keiner der Wandabschnitte für das Einlassen der Aufgussflüssigkeit beschädigt werden muss. Sobald der Druck des Mediums zum Öffnen der Kapsel sowie der Druck der Aufgussflüssigkeit wegfallen, nähern sich zudem die beiden Wandabschnitte wieder an und bilden so einen gewissen Schutz davor, dass eine Restflüssigkeit aus der Kapsel ausfliessen kann.

In einer bevorzugten Ausführungsform ist die Kapsel aus zwei Teilen zusammengesetzt, die je einen Wandabschnitt haben. Dabei verlaufen die beiden Wandabschnitte parallel zueinander und sind mit der Siegelverbindung zusammengefügt. Diese beiden Teile schliessen dann einen Hohlraum ein, worin das Pulver oder Granulat für das Aufgussgetränk eingefüllt ist. Dies ermöglicht ein einfaches, kostengünstiges und hygienisches Abfüllen der Kapsel.

Alternativ kann die Kapsel aus einem Stück gebildet werden. So kann zum Beispiel eine rechteckige Folie zusammengeklappt werden und an drei Kanten mit einer luftdichten Siegelverbindung so verschlossen werden, dass ein Hohlraum entsteht. Es ist auch möglich, dass die Kapsel die Form eines Schlauches hat, dessen Enden mit je einer Siegelverbindung verschlossen sind.

In einer bevorzugten Ausführungsform der Kapsel ist der eine Wandabschnitt im genannten Bereich der Siegelverbindung formstabil und der andere Wandabschnitt flexibel. Formstabil bedeutet insbesondere, dass eine Kraft zum Verformen des formstabilen Wandabschnitts grösser sein müsste, als die Haftkraft der Siegelverbindung auf diesem Wandabschnitt. Dadurch wird ein gutes Ablösen der Siegelverbindung von diesem Wandabschnitt ermöglicht. Andererseits bedeutet flexibel, dass der angelegte Druck den entsprechenden Wandabschnitt derart verformen kann, dass eine Einlassöffnung zwischen den beiden Wandabschnitten entsteht, durch die die Aufgussflüssigkeit ins Innere der Kapsel geleitet werden kann. Dabei kann der flexible Wandabschnitt sowohl plastisch wie auch elastisch verformbar sein. Ist der flexible Wandabschnitt elastisch, so hat dies den Vorteil, dass sich nach dem Wegfallen des Druckes der flexible Wandabschnitt wieder dem formstabilen Wandabschnitt annähert und so die Öffnung teilweise verschlossen wird.

Alternativ ist vorstellbar, dass das Medium zum Öffnen der Kapsel derart an die Siegelverbindung geleitet wird, dass der Druck des Mediums die beiden Wandabschnitte verformt und so auseinanderdrückt. Dazu müssen beide Wandabschnitte flexibel sein.

In einer bevorzugten Ausführungsform besteht der formstabile Wandabschnitt aus einem flexiblen Material, das zusätzlich durch eine formstabile Schicht im Bereich des Zugangs zur Siegelverbindung verstärkt wird. Diese zusätzliche formstabile Schicht kann zum Beispiel aus einer dickeren Schicht des gleichen flexiblen Materials bestehen, die, da die Schicht nun dicker ist, formstabil im oben beschriebenen Sinn wird. Es ist aber auch möglich, dass die zusätzliche Schicht aus einem vom flexiblen Material verschiedenen Material besteht. Diese zusätzliche Schicht muss nicht das ganze flexible Material bedecken, sondern es kann sich nur auf den Bereich des Zuganges zur Siegelverbindung erstrecken. Dies hat den Vorteil, dass Material und somit auch Kosten eingespart werden können.

Wie oben erwähnt, bestehen die Alternativen darin, dass der Druck zum Öffnen der Siegelverbindung beide, nun flexible Wandabschnitte, auseinander drückt oder dass der formstabile Wandabschnitt selber aus einem formstabilen Material angefertigt ist.

In einer bevorzugten Ausführungsform besteht die Kapsel aus einem formstabilen Behälter, zu dem der formstabile Wandabschnitt gehört, und einer flexiblen, im Wesentlichen ebenen Folie, zu der der flexible Wandabschnitt gehört. Je ein Teil eines Wandabschnittes der Folie sowie des Behälters verlaufen parallel zueinander und sind mit der Siegelverbindung zumindest zum Teil miteinander verbunden. Eine entsprechend aufgebaute Kapsel lässt sich rationell herstellen und befüllen und bietet einen guten Handhabungskomfort für den Endbenutzer.

Als Alternative sind zwei Behälter möglich, die dann an deren Rändern mit einer Siegelverbindung zusammengehalten werden. Dabei ist vorstellbar, dass beide Behälter aus einem flexiblen Material bestehen, dass aber der eine Wandabschnitt, wie oben beschrieben, verstärkt wird.

In einer bevorzugten Ausführungsform sind sowohl der Behälter als auch die Folie rotationssymmetrisch. Deren parallele Wandabschnitte bilden dann einen umlaufenden Flansch, so dass die Siegelverbindung ringförmig, dem Flansch entlang, verläuft. Eine rotationssymmetrische Form des Behälters sowie der Folie hat den Vorteil, dass die Aufgussflüssigkeit sich in der Kapsel gut mit dem Pulver respektive mit dem Granulat vermischt. Solche Kapseln sind zudem sowohl manuell als auch maschinell einfach handhabbar.

Alternative Formen des Behälters sowie der Folie sind denkbar. Dabei können Argumente wie Stapelbarkeit oder Positionierung der Kapsel die Form der Kapsel bestimmen. So sind zum Beispiel quaderförmige Kapseln mit rechteckiger Folie Platz sparender stapelbar als zylinderförmige oder konische Behälter mit kreisförmigen Folien.

In einer bevorzugten Ausführungsform ist der Zugang zur Siegelverbindung durch einen Durchbruch im formstabilen Wandabschnitt der Kapsel gegeben. Der Zugang verläuft somit im Wesentlichen senkrecht zu den parallelen Hauptflächen der Wandabschnitte im Bereich der Siegelverbindung. Dies hat den Vorteil, dass ein solcher Durchbruch bei Kapseln, die aus dem Stand der Technik bekannt sind, einfach herstellbar ist. Es lassen sich somit Kapseln herstellen, die sowohl von den herkömmlichen Geräten mittels einer Nadel oder eines Messers als auch durch das erfindungsgemässe Verfahren geöffnet werden können.

Der Zugang zur Siegelverbindung kann auch seitlich, parallel entlang der parallelen Wandabschnitte erfolgen. Eine allfällige Zuleitung zur Siegelverbindung, zum Beispiel ein Rohr, kann sich zwischen den beiden Wandabschnitten befinden, in einem Bereich, wo keine Siegelverbindung vorhanden ist. Das freie Ende der Zuleitung würde die Siegelverbindung aber berühren.

In einer bevorzugten Ausführungsform hat die Kapsel mehrere Durchbrüche, respektive Zugänge zur Siegelverbindung. Es ist nicht notwendig, dass beim Gebrauch der Kapsel alle Zugänge zur Siegelverbindung gebraucht werden, respektive, dass sich bei jedem Zugang zur Siegelverbindung dieselbe löst. Ein Vorteil von mehreren Zugängen besteht darin, dass die Kapsel nicht genau positioniert werden muss. Dies erleichtert gerade bei einer rotationssymmetrischen Kapsel die Handhabung. Werden zudem mehrere Zugänge bei der Zubereitung der Kapsel tatsächlich auch gebraucht, so ist eine bessere Durchmischung der Aufgussflüssigkeit mit dem Pulver oder Granulat in der Kapsel möglich.

Alternativ kann auch nur ein Durchbruch zur Siegelverbindung bestehen. Durch eine entsprechende Formgebung der Kapsel bzw. durch spezielle Profilierungen kann erreicht werden, dass der Zugang zur Siegelverbindung stets mit der Zuleitung des Geräts fluchtet.

In einer bevorzugten Ausführungsform des erfindungsgemässen Geräts ist dessen Halterung für die Kapsel so ausgebildet, dass sie die durch die Siegelverbindung verbundenen Wandabschnitte der Kapsel zumindest partiell festhält. Dadurch kann sichergestellt werden, dass Wandabschnitte der Kapsel, die sich nicht trennen sollen, zusammengehalten werden.

Alternativ kann die Halterung unabhängig von der Vorrichtung zum Öffnen der Kapsel ausgebildet sein.

In einer bevorzugten Ausführungsform besitzt das Gerät einen Aufnahmeraum, der die Wandabschnitte zumindest teilweise aufnehmen kann. Dabei ist der Aufnahmeraum derart ausgebildet, dass die parallelen Wandabschnitte in einem äusseren Bereich beidseitig derart eingeschlossen sind, so dass ein Lösen der Siegelverbindung nach aussen hin verhindert und nach innen ermöglicht wird. Dies hat den Vorteil, dass sich die Siegelverbindung nur dort lösen kann, wo es vorgesehen ist. Im Speziellen wird unterbunden, dass eine weitere, ungewollte Öffnung in der Kapsel entsteht. Der Aufnahmeraum ermöglicht dem flexiblen Wandabschnitt, dass er sich, nach dem Lösen der Siegelverbindung, auswölben und sich so vom gegenüberliegenden Wandabschnitt entfernen kann. Dadurch entsteht eine Öffnung. Zugleich kann der Aufnahmeraum den ausgewölbten Wandabschnitt derart unterstützen, dass der Wandabschnitt weder reisst, platzt oder sonst wie beschädigt wird.

Alternativ ist es möglich, dass ein Zusammenhalten eines äusseren Teils des Wandabschnitts durch das Gerät nicht stattfindet. In diesem Fall kann die Kapsel so beschaffen sein, dass jene Stellen der beiden Wandabschnitte, die sich nicht trennen dürfen, mit einer anderen Art von Verbindung zusammengehalten werden. Zum Beispiel indem die beiden Wandabschnitten an jenen Stellen, die sich nicht lösen dürfen, direkt verschweisst oder durch eine Siegelverbindung mit grösserer Haftfähigkeit verbunden sind.

Mit Vorteil liegt der Druck des Mediums zum Trennen der Siegelverbindung zwischen 10 bar und 20 bar, insbesondere zwischen 13 bar und 16 bar.

Die Grösse des Druckes kann auch ausserhalb dieses Bereiches liegen. Massgebend ist die Haftkraft der Siegelverbindung. Je nach verwendeter Siegelverbindung muss der Druck entsprechend gewählt werden. Der angegebene Bereich reicht aus, damit Siegelverbindungen, die gemäss dem Stand der Technik hergestellt sind, trennbar sind.

In einer bevorzugten Ausführungsform ist das Medium zum Öffnen der Siegelverbindung identisch mit der Aufgussflüssigkeit (insbesondere mit erhitztem Wasser einer Temperatur von ca. 65-85 °C). Dies hat den Vorteil, dass beim Einlassen der Aufgussflüssigkeit in die Kapsel, die Ausgussflüssigkeit selber die Kapsel öffnen kann. Dadurch wird kein zweites Medium zum Öffnen der Kapsel benötigt. Wird - wie oben angegeben - ein Druck zwischen 10 bar und 20 bar, insbesondere zwischen 13 bar und 16 bar, gewählt, kann für das Öffnen und für die Zubereitung des Aufgussgetränks (z. B. von Kaffee) derselbe Druck verwendet werden.

Alternativ kann auch ein anderes Medium, zum Beispiel Luft, zum Öffnen der Kapsel verwendet werden. Dadurch können unterschiedliche Drücke für das Öffnen sowie für das Zubereiten des Aufgussgetränkes verwendet werden. So könnte ein kurzer, aber starker Luftstoss die Kapsel öffnen. Danach wird unter geringerem Druck die Aufgussflüssigkeit in die Kapsel eingelassen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1a: Eine Seitenansicht der Kapsel mit Halterung;
- Fig. 1b: eine Sicht von oben auf die Kapsel in der Halterung;
- Fig. 2a: einen Schnitt durch die Kapsel und die Halterung;
- Fig. 2b: eine Detailansicht des Schnitts gemäss Fig. 2a;
- Fig. 3a: einen Schnitt durch die Detailansicht der Kapsel in verschlossenem Zustand; und
- Fig. 3b: einen Schnitt durch die Detailansicht der Kapsel in offenem Zustand.

Grundsätzlich sind in den Figuren gleiche Teile mit gleichen Bezugszeichen versehen.

### Wege zur Ausführung der Erfindung

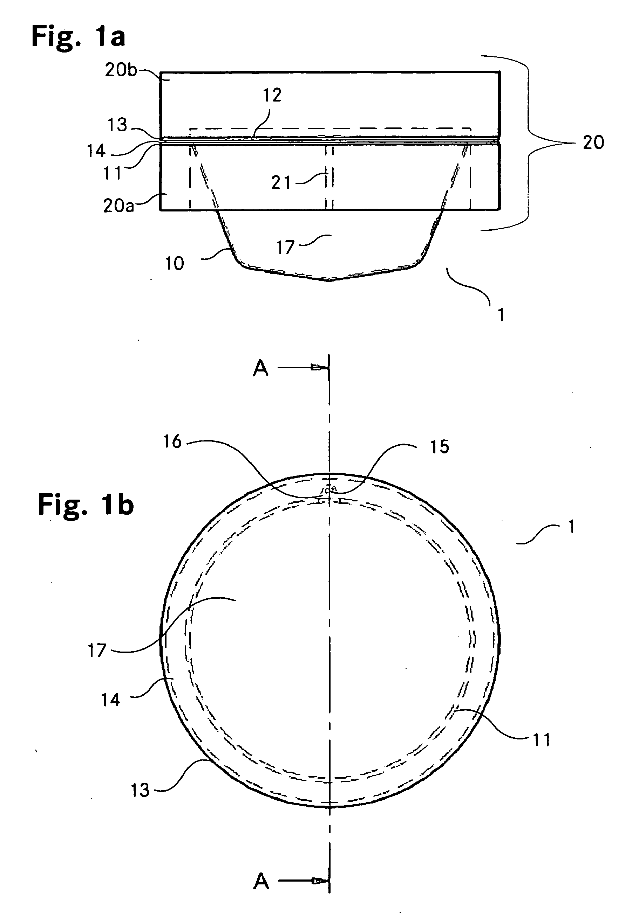

Die Figur 1a zeigt eine Kapsel 1, die von einer Halterung 20 eines Gerätes zur Zubereitung eines Aufgussgetränkes festgehalten wird. Die Kapsel 1 besteht aus einem formstabilen, sich nach oben hin vergrössernden, konischen Behälter 10. Innerhalb des Behälters 10 ist ein Hohlraum 17 gebildet. Ein Wandabschnitt 11 am Rande des Behälters 10 ist horizontal, einen Flansch bildend, nach aussen gebogen. Die Kapsel 1 besteht weiter aus einer kreisförmigen, flexiblen Folie 12, die den Behälter 10 verschliesst, indem ein Wandabschnitt 13 am Rande der Folie 12 durch eine Siegelverbindung 14 mit dem Wandabschnitt 11 verbunden ist. Die Siegelverbindung 14 verläuft somit ringförmig dem Flansch entlang zwischen den beiden Wandabschnitten 11 und 13. Die Kapsel 1 wird durch die Halterung 20 des Gerätes, bestehend aus einem unteren Halterungsteil 20a und einem oberen Halterungsteil 20b, festgehalten. Der untere Haltungsteil 20a besitzt eine Zuleitung 21, die vertikal von unten an den Wandabschnitt 11 des Behälters 10 führt.

Die Figur 1b zeigt dieselbe Anordnung wie in Figur 1a von oben. Dabei ist ein Durchbruch in der Form eines Loches 15 im Wandabschnitt 11 des Behälters 10 sichtbar. Die Kapsel 1 ist so in der Halterung positioniert, dass das Loch 15 mit dem oberen Ende der Zuleitung 21 in der Halterung 20 fluchtet. Zudem ist ein Bereich 16 der Siegelverbindung 14 sichtbar, in welchem sich beim Öffnen der Kapsel 1 die Siegelverbindung 14 auftrennt und so einen Zugang in den Hohlraum 17 der Kapsel 1 ermöglicht.

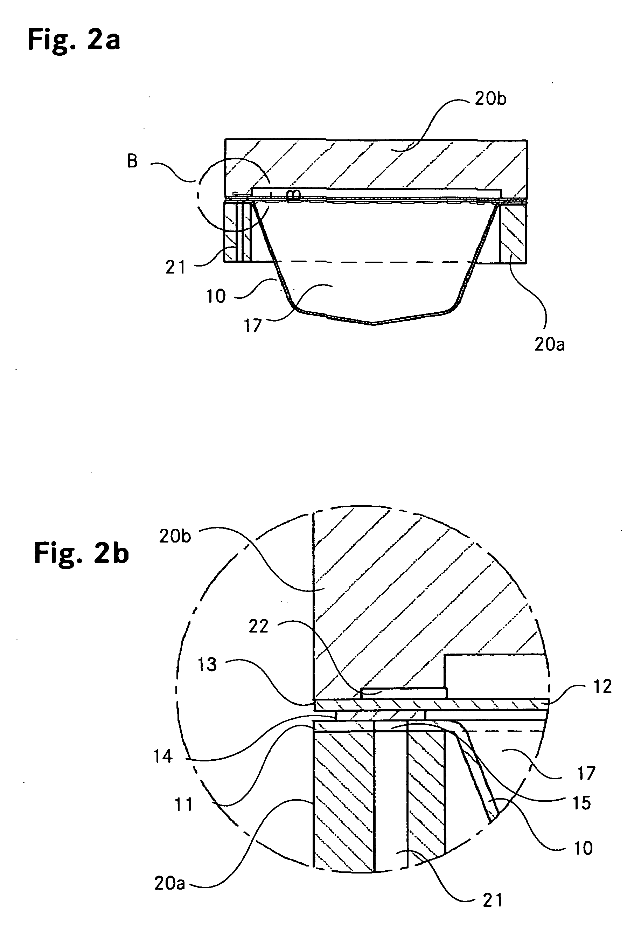

Die Figur 2a zeigt einen Längsschnitt entlang einer Achse A-A durch die Kapsel 1 sowie die Zuleitung 21, die sich in der Zeichnung auf der linken Seite des Behälters 10 befindet. Die Figur 2b zeigt eine Detailansicht einer Region B, die das obere Ende der Zuleitung 21, das Loch 15, die beiden Wandabschnitte 11 und 13, sowie die Siegelverbindung 14 einschliesst. Die Figur 2b zeigt die Kapsel 1 im noch geschlossenen Zustand. So bedeckt die Siegelverbindung 14 das Loch 15 im Wandabschnitt 11 des unteren Halterungsteils 20a. Wie bereits oben erwähnt, endet die Zuleitung 21 beim Loch 15. So entsteht ein direkter Zugang für ein flüssiges oder gasförmiges Medium zur Siegelverbindung 14. Gegenüber des Wandabschnitts 11, direkt auf der Siegelverbindung 14 anhaftend, befindet sich der Wandabschnitt 13 der Folie 12. Oberhalb des Wandabschnitts 13 befindet sich das obere Halterungsteil 20b. Die äusseren Ränder der Wandabschnitte 11 und 13 werden vom oberen sowie unteren Halterungsteil 20a und 20b zusammengehalten. Der Wandabschnitt 11 des Behälters wird, ausser beim Loch 15, über die ganze Länge des Wandabschnittes 11 vom Halterungsteil 20a unterstützt. Im oberen Halterungsteil 20b, in der Verlängerung der Zuleitung 21, direkt an den Wandabschnitt 13 anschliessend, befindet sich ein hohler Aufnahmeraum 22. Dieser Aufnahmeraum 22 ist in Bezug auf die Kapsel radial nach aussen durch das Halterungsteil 20b abgeschlossen. Radial nach innen erstreckt sich dieser Aufnahmeraum 22 bis auf die Höhe, wo auf der Behälterseite der durch den Behälter 10 gebildete Hohlraum 17 der Kapsel 1 beginnt.

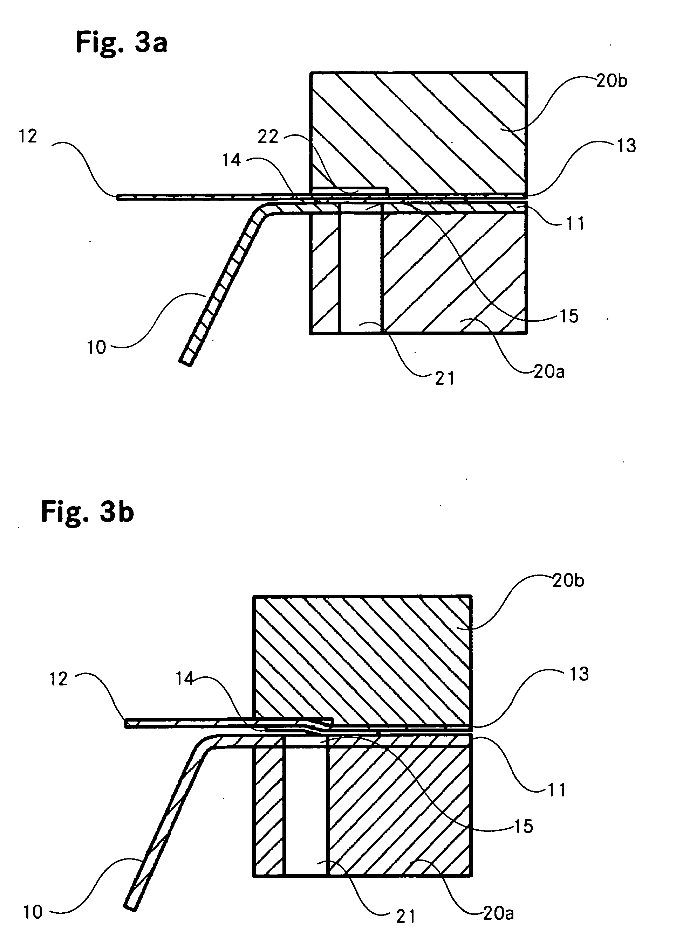

Die Figuren 3a und 3b zeigen einen Längsschnitt entlang der Achse A der Ansicht aus Figur 1b. Figur 3a zeigt den verschlossenen Zustand der Kapsel 1, bei dem sich die Siegelverbindung 14 noch nicht vom Wandabschnitt 11 des Behälters 10 getrennt hat.

Es wird nun ein flüssiges oder gasförmiges Medium unter Druck durch die Zuleitung 21 und durch das Loch 15 im Behälter 10 an die Siegelverbindung 14 geleitet. Dieses Medium übt aufgrund des Drucks eine Kraft auf die Siegelverbindung und auf den Wandabschnitt 13 der flexiblen Folie 12 aus. Da der Wandabschnitt 11 des Behälters formstabil ist, das heisst die Kraft, die zum Verformen des Wandabschnittes 11 benötigt würde, grösser ist als die Haftkraft der Siegelverbindung 14 am Wandabschnitt 11, löst sich die Siegelverbindung 14 vom Wandabschnitt 11. Die Siegelverbindung 14 kann sich aber nur dort lösen, wo der Wandabschnitt 13 der Folie 12 nicht gehalten wird. Das heisst, die Siegelverbindung löst sich an der Stelle, wo sich der Aufnahmeraum 22 hinter dem Wandabschnitt 13 befindet. Dank diesem Aufnahmeraum 22 kann sich der Wandabschnitt 13 aufwölben, wie dies in der Figur 3b dargestellt ist. Dadurch entsteht eine Lücke zwischen der Siegelverbindung 14 und dem Wandabschnitt 11. Eine Aufgussflüssigkeit kann nun durch die gleiche Zuleitung 21 durch diese Lücke in den Hohlraum 17 des Behälters 10 eingeleitet werden. An der Stelle, an der die beiden Halterungsteile 20a und 20b die Wandabschnitte 11 und 13 aneinander halten, kann sich die Siegelverbindung 14 nicht lösen, da kein Raum zum Aufwölben des Wandabschnitts zur Verfügung steht.

Im vorgestellten Ausführungsbeispiel sind nur je eine Zuleitung in der Halterung und ein Loch im formstabilen Wandabschnitt vorhanden. Beim Einsetzen der Kapsel in die Halterung ist es deshalb notwendig, dass das Loch im formstabilen Wandabschnitt genau über der Zuleitung zu liegen kommt. Es ist nun möglich, dass im ganzen Flansch des formstabilen Wandabschnitts Löcher vorhanden sind. Ist das Verhältnis zwischen dem Durchmesser der Löcher und der Zuleitung sowie die Anzahl der Löcher richtig gewählt, so wird unabhängig von der Orientierung der Kapsel immer ein Loch über der Zuleitung zu liegen kommen.

Die Form der Kapsel kann variieren. Anstelle der konischen Form könnte die Kapsel zylinderförmig sein. Auch der Boden könnte statt nach aussen gebogen auch flach oder nach innen gewölbt sein. Die Form der Kapsel beeinflusst, wie gut sich die Aufgussflüssigkeit mit dem Pulver oder dem Granulat der Kapsel vermischt. Die Kapsel muss nicht rotationssymmetrisch sein. Falls sie beispielsweise eine unregelmässige Aussenkontur besitzt, kann dadurch sichergestellt werden, dass das Loch im formstabilen Wandabschnitt und die Zuleitung im unteren Halterungsteil stets fluchten, weil die Kapsel nur in einer bestimmten Orientierung in die Halterung eingesetzt werden kann.

Es ist möglich, dass Siebe in der Kapsel vorhanden sind, die verhindern, dass nicht aufgelöste Teile des Pulvers oder des Granulats ausfliessen können.

Zusammenfassend ist festzustellen, dass durch die Erfindung eine Kapsel sowie ein dazu gehöriges Gerät und Verfahren zur Zubereitung eines Aufgussgetränkes geschaffen werden, mit denen es möglich ist, die Kapsel schonend zu öffnen, so dass Kontaminationen eines Aufgussgetränkes reduziert werden können.

## Patentansprüche

1. Kapsel (1) für Aufgussgetränke, umfassend zwei parallele Wandabschnitte (11) und (13), die zumindest zum Teil mit einer Siegelverbindung (14) verbunden sind, **dadurch gekennzeichnet, dass** die Siegelverbindung (14) einen Bereich (16) aufweist, zu welchem ein Zugang (15) von aussen besteht, so dass durch Einleiten eines unter Druck stehenden flüssigen oder gasförmigen Mediums durch diesen Zugang (15) zumindest ein Teil der Siegelverbindung (14) auftrennbar ist, wobei eine Öffnung zum Einleiten einer Aufgussflüssigkeit in die Kapsel geschaffen wird.

2. Kapsel (1) nach Anspruch 1, **dadurch gekennzeichnet, dass** die Kapsel (1) aus zwei Teilen (10) und (11) zusammengefügt ist, wobei die zwei Teile (10) und (11) durch die Siegelverbindung (14) verbunden sind.

3. Kapsel (1) nach Anspruch 1 oder 2, **dadurch gekennzeichnet, dass** ein erster der Wandabschnitte (11) im genannten Bereich (16) der Siegelverbindung (14) formstabil und der zweite der Wandabschnitte (13) in diesem Bereich (16) flexibel ist.

4. Kapsel (1) nach Anspruch 3, **dadurch gekennzeichnet, dass** der erste, formstabile Wandabschnitt (11) aus einem flexiblen Material besteht, das mit Hilfe einer zweiten, formstabilen Schicht verstärkt ist.

5. Kapsel (1) nach Anspruch 3 oder 4, **dadurch gekennzeichnet, dass** der erste Wandabschnitt (11) zur Wand eines formstabilen Behälters (10) gehört und der zweite Wandabschnitt (13) zur Wand einer flexiblen, im Wesentlichen ebenen Folie (12) gehört.

6. Kapsel (1) nach Anspruch 5, **dadurch gekennzeichnet, dass** der Behälter (10) und die Folie (12) im Wesentlichen rotationssymmetrisch sind und die Wandabschnitte (11) und (13) einen umlaufenden Flansch bilden, so dass die Siegelverbindung (14) ringförmig verläuft.

7. Kapsel (1) nach einem der Ansprüche 3 bis 6, **dadurch gekennzeichnet, dass** der Zugang (15) zur Siegelverbindung (14) durch mindestens einen Durchbruch im formstabilen Wandabschnitt (11) der Kapsel (1) gegeben ist.

8. Kapsel (1) nach Anspruch 7, **dadurch gekennzeichnet, dass** mehrere beabstandete Durchbrüche (15) im formstabilen Wandabschnitt (11) der Kapsel (1) vorhanden sind.

9. Gerät zum Zubereiten eines Aufgussgetränkes unter Einsatz einer Kapsel (1) nach einem der Ansprüche 1 bis 8, **gekennzeichnet durch** eine Halterung (20) für die Kapsel (1) und mindestens eine Zuleitung (21) für ein unter Druck stehendes flüssiges oder gasförmiges Medium, welche derart ausgebildet ist, dass das Medium bei in die Halterung (20) des Geräts eingesetzter Kapsel (1) **durch** einen Zugang der Kapsel (1) zu einer Siegelverbindung (14) zwischen zwei parallelen Wandabschnitten (11) der Kapsel (1) geleitet wird, wodurch zumindest ein Teil der Siegelverbindung (14) auftrennbar ist, wobei eine Öffnung (16) zum Einleiten einer Aufgussflüssigkeit in die Kapsel (1) geschaffen wird.

10. Gerät nach Anspruch 9, **dadurch gekennzeichnet, dass** die Halterung (20) derart ausgebildet ist, dass die Kapsel (1) zumindest partiell an den Wandabschnitten (11) und (13) festgehalten werden kann, die zumindest zum Teil durch die Siegelverbindung (14) verbunden sind.

11. Gerät nach Anspruch 9 oder 10, **gekennzeichnet durch** einen Aufnahmeraum (22), in welchem die **durch** die Siegelverbindung (14) verbundenen Wandabschnitte (11) und (13) der Kapsel zumindest teilweise aufnehmbar sind, wobei der Aufnahmeraum (21) derart ausgebildet ist, dass die parallelen Wandabschnitte (11) und (13) in einem äusseren Bereich beidseitig derart eingeschlossen sind, dass ein Lösen der Siegelverbindung (14) nach aussen verhindert und nach innen ermöglicht wird.

12. Verfahren zur Zubereitung eines Aufgussgetränks unter Verwendung einer Kapsel (1) nach einem der Ansprüche 1 bis 8, **dadurch gekennzeichnet, dass** ein unter Druck stehendes flüssiges oder gasförmiges Medium durch einen Zugang der Kapsel (1) einer Siegelverbindung (14) zwischen zwei parallelen Wandabschnitten (11) und (13) der Kapsel (1) zugeführt wird, wodurch zumindest ein Teil der Siegelverbindung (14) aufgetrennt wird, so dass eine Öffnung (16) zum Einleiten einer Aufgussflüssigkeit in die Kapsel (1) geschaffen wird.

13. Verfahren nach Anspruch 12, **dadurch gekennzeichnet, dass** der Druck im Bereich von 10 bar bis 20 bar, insbesondere von 13 bar bis 16 bar, liegt.

14. Verfahren nach Anspruch 12 oder 13, **dadurch gekennzeichnet, dass** das Medium zum Auftrennen der Siegelverbindung (14) identisch mit der Aufgussflüssigkeit ist, die für die Zubereitung des Aufgussgetränks verwendet wird.

## Claims

1. A capsule (1) for infusion beverages, comprising two parallel wall portions (11) and (13) which are connected at least in part to a sealing connection (14), **characterized in that** the sealing connection (14) has a region (16) to which there is an access (15) from the outside, so that at least a part of the sealing connection (14) can be undone by introducing a pressurized liquid or gaseous medium through this access (15), an opening being created for introducing an infusion liquid into the capsule.

2. The capsule (1) as claimed in claim 1, **characterized in that** the capsule (1) is assembled from two parts (10) and (11), the two parts (10) and (11) being connected by the sealing connection (14).

3. The capsule (1) as claimed in claim 1 or 2, **characterized in that** a first of the wall portions (11) is dimensionally stable in the aforementioned region (16) of the sealing connection (14) and the second of the wall portions (13) is flexible in this region (16).

4. The capsule (1) as claimed in claim 3, **characterized in that** the first, dimensionally stable wall portion (11) is made of a flexible material which is reinforced with the aid of a second, dimensionally stable layer.

5. The capsule (1) as claimed in claim 3 or 4, **characterized in that** the first wall portion (11) pertains to the wall of a dimensionally stable container (10) and the second wall portion (13) pertains to the wall of a flexible, substantially flat foil (12).

6. The capsule (1) as claimed in claim 5, **characterized in that** the container (10) and the foil (12) are substantially rotationally symmetrical and the wall portions (11) and (13) form a peripheral flange, so that the sealing connection (14) runs annularly.

7. The capsule (1) as claimed in one of claims 3 to 6, **characterized in that** the access (15) to the sealing connection (14) is provided by at least one aperture in the dimensionally stable wall portion (11) of the capsule (1).

8. The capsule (1) as claimed in claim 7, **characterized in that** a plurality of set-apart apertures (15) are present in the dimensionally stable wall portion (11) of the capsule (1).

9. A device for preparing an infusion beverage using a capsule (1) as claimed in one of claims 1 to 8, **characterized by** a holder (20) for the capsule (1) and at least one feed line (21) for a pressurized liquid or gaseous medium, the feed line being embodied in such a way that, when the capsule (1) is inserted into the holder (20) of the device, the medium is guided through an access of the capsule (1) to a sealing connection (14) between two parallel wall portions (11) of the capsule (1), allowing at least a part of the sealing connection (14) to be undone, an opening (16) being created for introducing an infusion beverage into the capsule (1).

10. The device as claimed in claim 9, **characterized in that** the holder (20) is embodied in such a way that the capsule (1) can be at least partially secured to the wall portions (11) and (13) which are connected at least in part by the sealing connection (14).

11. The device as claimed in claim 9 or 10, **characterized by** a receiving space (22) in which the wall portions (11) and (13) of the capsule can be at least partly received, the wall portions being connected by the sealing connection (14), the receiving space (21) being embodied in such a way that the parallel wall portions (11) and (13) are enclosed on both sides in an outer region in such a way that detachment of the sealing connection (14) is prevented outward and allowed inward.

12. A method for preparing an infusion beverage using a capsule (1) as claimed in one of claims 1 to 8, **characterized in that** a pressurized liquid or gaseous medium is supplied through an access of the capsule (1) to a sealing connection (14) between two parallel wall portions (11) and (13) of the capsule (1), as a result of which at least a part of the sealing connection (14) is undone, so that an opening (16) is created for introducing an infusion liquid into the capsule (1).

13. The method as claimed in claim 12, **characterized in that** the pressure is in the range of from 10 bar to 20 bar, in particular from 13 bar to 16 bar.

14. The method as claimed in claim 12 or 13, **characterized in that** the medium for undoing the sealing connection (14) is identical to the infusion liquid used for preparing the infusion beverage.

## Revendications

1. Capsule (1) pour boissons infusées, comprenant deux parties de paroi parallèles (11) et (13), qui sont assemblées au moins en partie avec un assemblage scellé (14), **caractérisée en ce que** l'assemblage scellé (14) présente une région (16) à laquelle il existe un accès (15) de l'extérieur, de telle manière qu'en introduisant un fluide liquide ou gazeux se trouvant sous pression à travers cet accès (15), au moins une partie de l'assemblage scellé (14) puisse être séparée, dans laquelle il est prévu une ouverture pour l'introduction d'un liquide d'infusion dans la capsule.

2. Capsule (1) selon la revendication 1, **caractérisée en ce que** la capsule (1) se compose de deux parties (10) et (11), dans laquelle les deux parties (10) et (11) sont assemblées par l'assemblage scellé (14).

3. Capsule (1) selon la revendication 1 ou 2, **caractérisée en ce qu'**une première des parties de paroi (11) est de forme stable dans ladite région (16) de l'assemblage scellé (14) et la deuxième des parties de paroi (13) est flexible dans cette région (16).

4. Capsule (1) selon la revendication 3, **caractérisée en ce que** la première partie de paroi (11) de forme stable se compose d'un matériau flexible, qui est renforcé avec une deuxième couche de forme stable.

5. Capsule (1) selon la revendication 3 ou 4, **caractérisée en ce que** la première partie de paroi (11) fait partie de la paroi d'un récipient de forme stable (10) et la deuxième partie de paroi (13) fait partie de la paroi d'une feuille souple sensiblement plane (12).

6. Capsule (1) selon la revendication 5, **caractérisée en ce que** le récipient (10) et la feuille (12) sont essentiellement symétriques de rotation et les parties de paroi (11) et (13) forment une bride périphérique, de telle manière que l'assemblage scellé (14) soit annulaire.

7. Capsule (1) selon l'une quelconque des revendications 3 à 6, **caractérisée en ce que** l'accès (15) à l'assemblage scellé (14) est fourni par au moins un passage dans la partie de paroi de forme stable (11) de la capsule (1).

8. Capsule (1) selon la revendication 7, **caractérisée en ce qu'**il se trouve plusieurs passages espacés (15) dans la partie de paroi de forme stable (11) de la capsule (1).

9. Appareil pour préparer une boisson infusée en utilisant une capsule (1) selon l'une quelconque des revendications 1 à 8, **caractérisé par** un support (20) pour la capsule (1) et au moins une conduite d'arrivée (21) pour un fluide liquide ou gazeux se trouvant sous pression, qui est configurée de telle manière que, lorsque la capsule (1) est insérée dans le support (20) de l'appareil, le fluide soit conduit à travers un accès de la capsule (1) à un assemblage scellé (14) entre deux parties de paroi parallèles (11) de la capsule (1), au moins une partie de l'assemblage scellé (14) pouvant ainsi être séparée, procurant ainsi une ouverture (16) destinée à l'introduction d'un liquide d'infusion dans la capsule (1).

10. Appareil selon la revendication 9, **caractérisé en ce que** le support (20) est réalisé de telle manière que la capsule (1) puisse être immobilisée au moins en partie sur les parties de paroi (11) et (13), qui sont assemblées au moins en partie par l'assemblage scellé (14).

11. Appareil selon la revendication 9 ou 10, **caractérisé par** un espace de réception (22), dans lequel les parties de paroi (11) et (13) de la capsule assemblées par l'assemblage scellé (14) peuvent être logées au moins en partie, dans lequel l'espace de réception (22) est réalisé de telle manière que les parties de paroi parallèles (11) et (13) soient enfermées sur les deux côtés dans une région extérieure de telle manière qu'une séparation de l'assemblage scellé (14) vers l'extérieur soit empêchée et soit permise vers l'intérieur.

12. Procédé de préparation d'une boisson infusée en utilisant une capsule (1) selon l'une quelconque des revendications 1 à 8, **caractérisé en ce que** l'on amène un fluide liquide ou gazeux se trouvant sous pression à travers un accès de la capsule (1) d'un assemblage scellé (14) entre deux parties de paroi parallèles (11) et (13) de la capsule (1), séparant ainsi une partie de l'assemblage scellé (14) de façon à procurer une ouverture (16) destinée à l'introduction d'un liquide d'infusion dans la capsule (1).

13. Procédé selon la revendication 12, **caractérisé en ce que** la pression se situe dans la plage de 10 bars à 20 bars, de préférence de 13 bars à 16 bars.

14. Procédé selon la revendication 12 ou 13, **caractérisé en ce que** le fluide destiné à séparer l'assemblage scellé (14) est identique au liquide d'infusion qui est utilisé pour la préparation de la boisson infusée.
